# EUROPÄISCHE PATENTSCHRIFT

(11) **EP 3 075 044 B1**
(45) Veröffentlichungstag und Bekanntmachung des Hinweises auf die Patenterteilung: **01.11.2017**
(21) Anmeldenummer: 14806179.9
(22) Anmeldetag: 26.11.2014
(51) Int. Cl.: H02G 3/08, E05D 3/02

(54) **BEHÄLTNIS**
CONTAINER
CONTENANT

(30) Priorität: 29.11.2013 DE 102013018119
(43) Veröffentlichungstag der Anmeldung: 05.10.2016
(73) Patentinhaber: Eaton Protection Systems IP GmbH & Co. KG, 12529 Schönefeld (DE)
(72) Erfinder: NAUMANN, Rainer, 68239 Mannheim (DE); SAUER, Dieter, 69434 Heddesbach (DE)
(74) Vertreter: Grünecker Patent- und Rechtsanwälte PartG mbB
(86) Internationale Anmeldenummer: PCT/EP2014/003161
(87) Internationale Veröffentlichungsnummer: WO 2015/078584

(56) Entgegenhaltungen:
- DE-A1-102006 052 723
- DE-U1-202007 004 768
- FR-A5- 2 099 120

## Beschreibung

Die Erfindung betrifft ein Behältnis mit zumindest einem kastenförmigen Unterteil und einem mit diesem mittels einer Verschwenkeinrichtung zwischen einer Schließstellung und einer Öffnungsstellung verschwenkbar verbundenen Deckelteil. Die Verschwenkeinrichtung weist einen dem Deckelteil zugeordneten ersten Bolzen und eine dem Unterteil zugeordneten zweiten Bolzen auf, welche Bolzen verschwenkbar miteinander verbunden sind. Der zweite Bolzen ist im Unterteil zwischen einer Einschub- und einer Ausschubstellung längsverschieblich gelagert.

Ein solches Behältnis oder Gehäuse ist aus der DE 10 2006 052 723 bekannt. Das entsprechende Behältnis oder Gehäuse ist explosionsgeschützt ausgeführt und dient beispielsweise zum Einbau von Klemmen und von eigensicheren und nicht eigensicheren Stromkreisen. Der Explosionsschutz ist in der Schutzart Ex-e beziehungsweise Ex-i ausgebildet. Materialien für solche Gehäuse sind beispielsweise Metall, insbesondere rostfreier Stahl, oder Kunststoff, insbesondere Polyester oder glasfaserverstärkter Polyester.

Die Verschwenkeinrichtung nach der vorbekannten Druckschrift weist als ersten Bolzen ein Gelenkoberteil und als zweiten Bolzen ein Gelenkunterteil auf. Diese sind miteinander schwenkbar verbunden. Das Gelenkunterteil beziehungsweise der zweite Bolzen ist in einer Gehäusewandung angeordnet und dort in einer entsprechenden Aufnahmebohrung verschiebbar und durch ein Federelement kraftbeaufschlagt bewegbar.

Das vorbekannte Gehäuse ermöglicht in einfacher Weise eine eng benachbarte Anordnung von Gehäusen sowie auch eine vollständige Nutzung des Gehäuseinneren. Ein bestimmter Abstand bei Nebeneinanderanordnung von zwei Gehäusen oder mehreren Gehäusen ist nicht einzuhalten, noch wird durch die Anordnung der Verschwenkeinrichtung das Gehäuseinnere in irgendeiner Weise verkleinert.

Entsprechende Vorteile ergeben sich auch beim Anmeldungsgegenstand. Bei dem vorbekannten Gehäuse beziehungsweise Behältnis hat sich allerdings als gewisser Nachteil herausgestellt, dass beispielsweise bei Austausch des Deckelteils das gesamte Gehäuse beziehungsweise Behältnis entfernt werden muss und erst an einer anderen Stelle als der Einbaustelle ein Austausch des Deckelteils stattfinden kann. Ein solcher Austausch des Deckelteils erfolgt beispielsweise dann, wenn der Explosionsschutz und/oder eine gewisse Dichtigkeit des Deckelteils in Schließstellung relativ zum Unterteil nicht mehr ausreichend gewährleistet ist.

Vorliegender Anmeldung liegt daher die Aufgabe zugrunde, ein Behältnis der eingangs genannten Art dahingehend zu verbessern, dass in einfacher Weise und ohne Ausbau des Unterteils des Behältnisses ein Austausch des Deckelteils möglich ist.

Diese Aufgabe wird durch die Merkmale des Patentanspruchs 1 gelöst.

Erfindungsgemäß erfolgt ein Einsetzen des zweiten Bolzens in eine Aufnahmehülse, wobei der zweite Bolzen in diese Aufnahmehülse längs verschieblich zwischen entsprechender Einschub- und Ausschubstellung gelagert ist. D. h., die längs verschiebliche Lagerung des zweiten Bolzens erfolgt nicht direkt gegenüber dem Unterteil oder dem Behältnis, sondern direkt gegenüber der Aufnahmehülse, die selbst wiederum im Unterteil lösbar von Seiten des Deckelteils her gelagert ist. D. h., die Aufnahmehülse ist vom Unterteil ohne Entfernen des Unterteils aus seiner Montageposition lösbar und mit der Aufnahmehülse wird der zweite Bolzen und damit auch der erste Bolzen und die gesamte Verschwenkeinrichtung entfernt, die über den ersten Bolzen am Deckelteil befestigt ist.

Auf diese Weise bleiben die Vorteile des vorbekannten Gehäuses beziehungsweise Behältnisses erhalten, wobei allerdings zusätzlich eine einfache und kostengünstige Ausbaumöglichkeit für das Deckelteil geschaffen wird.

Im einfachsten Fall und mit möglichst wenig Platzaufwand lässt sich die Aufnahmehülse im Unterteil anordnen, wenn eine zumindest in Richtung Deckelteil offene Vertikalbohrung in einer Wandung des Unterteils ausgebildet ist, in welcher die Aufnahmehülse anordbar ist.

Um die Aufnahmehülse in einfacher Weise in dieser Vertikalbohrung lösbar befestigen zu können, kann die Aufnahmehülse ein Außengewinde und die Vertikalbohrung ein passendes Innengewinde zur gegenseitigen lösbaren Befestigung aufweisen.

Um eine Verschiebbarkeit des zweiten Bolzens innerhalb der Aufnahmehülse zu ermöglichen und gleichzeitig zu verhindern, dass der zweite Bolzen die Aufnahmehülse ungewollt verlassen kann, kann die Aufnahmehülse insbesondere an ihrem unteren Hülsenende einen zumindest teilweise umlaufenden Anschlag aufweisen, der in Ausschubstellung des zweiten Bolzens mit einem Gegenanschlag am zweiten Bolzen in Anlage ist. Dadurch wird ermöglicht, dass der zweite Bolzen sich so weit aus der Aufnahmehülse verschieben kann, bis er seine maximale Ausschubstellung relativ zur Aufnahmehülse eingenommen hat. In dieser Stellung ist das Deckelteil relativ weit geöffnet, sodass das Innere des Behältnisses in einfacher Weise und im Wesentlichen vollständig zugänglich ist. Erst in Einschubstellung des zweiten Bolzens ist ein Verschwenken des Deckelteils in Anlage mit einer Oberkante des Unterteils möglich, um Deckelteil und Unterteil miteinander zu verbinden.

Es besteht die Möglichkeit, dass der entsprechende umlaufende Anschlag der Aufnahmehülse ein separat ausgebildetes oder angeordnetes Teil ist. Es erweist sich allerdings als günstig, wenn gegebenenfalls der Anschlag durch den unteren Endrand der Aufnahmehülse gebildet ist. D. h., am unteren Ende der Aufnahmehülse ist ein entsprechender Rand gebildet, der bei dem zweiten Bolzen in Ausschubstellung mit dem entsprechenden Gegenanschlag am Bolzen in Anlage ist.

Der Gegenanschlag kann vorzugsweise als radial nach außen vorstehender Randflansch insbesondere am unteren Bolzenende des zweiten Bolzens ausgebildet sein. Auch für diesen Randflansch gilt, dass dieser nicht vollständig umlaufen muss. Theoretisch ist auch nur an einer Stelle ein nach außen vorstehender Vorsprung denkbar.

Um in einfacher Weise eine entsprechende Zuordnung des zweiten Bolzens zu einer Druckfeder zu ermöglichen, kann der zweite Bolzen eine von seinem unteren Bolzenende her offene Einsteckbohrung aufweisen, in die teilweise eine Druckfeder einsteckbar ist. Durch diese Druckfeder wird der zweite Bolzen relativ zur Aufnahmehülse bis in zumindest seine Ausschubstellung verschoben, wenn das Deckelteil in Öffnungsstellung ist oder vom Unterteil gelöst ist.

Zur Abstützung der Druckfeder ist es in diesem Zusammenhang beispielsweise denkbar, dass die Druckfeder sich an ihrem der Einsteckbohrung des zweiten Bolzens gegenüberliegenden unteren Federende im Unterteil abstützt. Dies kann beispielsweise durch ein unteres und geschlossenes Ende der Vertikalbohrung erfolgen. Um die Druckfeder zumindest teilweise abzustützen, kann dem unteren Federende ein Führungsbolzen zugeordnet sein, auf dem die Druckfeder zumindest teilweise aufgeschoben ist. Dabei kann sich die Druckfeder mit ihrem unteren Federende weiterhin beispielsweise am unteren Ende der Vertikalbohrung abstützen, wobei sie allerdings zumindest in ihrer Längsrichtung seitlich durch den Führungsbolzen abgestützt wird.

In diesem Zusammenhang kann es sich weiterhin als vorteilhaft erweisen, wenn der Führungsbolzen einen zumindest teilweise umlaufenden, radial nach außen vorstehenden Anschlagflansch aufweist, der das untere Federende abstützt. Auf diese Weise erfolgt eine Abstützung der Druckfeder unabhängig von der Vertikalbohrung.

Um den Führungsbolzen in der Wandung des Unterteils in einfacher Weise und sicher anordnen zu können, kann der Führungsbolzen mit seinem unteren Endabschnitt in einer Einschraubbohrung in der Wandung des Unterteils einschraubbar sein.

Um den Führungsbolzen in einfacher Weise in der Wandung und der Einschraubbohrung anordnen zu können, kann eine nach außen offene Ausnehmung oberhalb der Einschraubbohrung im Unterteil zum Ein-/Ausbau des Führungsbolzens ausgebildet sein. Diese Ausnehmung ist in der Regel seitlich offen, d. h. über diese Ausnehmung kann der Führungsbolzen mit seinem entsprechenden unteren Endabschnitt in die Einschraubbohrung eingeschraubt werden. Die Einschraubbohrung verläuft in der Regel koaxial zur Vertikalbohrung, wobei die entsprechende seitlich offene Ausnehmung zwischen Vertikalbohrung und Einschraubbohrung angeordnet sein kann.

Um einen Angriff an der Aufnahmehülse zum Lösen beziehungsweise Befestigen in der Vertikalbohrung zu ermöglichen, kann die Aufnahmehülse benachbart zu ihrem oberen Hülsenende einen umlaufenden Ringspalt aufweisen. Dieser kann beispielsweise zum Angriff eines Schraubenschlüssels oder dergleichen dienen.

Um bei Einschrauben der Aufnahmehülse in der Vertikalbohrung eine entsprechende Endeinschraubposition festlegen zu können, kann die Aufnahmehülse in ihrem oberen Endabschnitt oberhalb des Ringspaltes einen im Vergleich zum Außendurchmesser unterhalb des Ringspaltes größeren Außendurchmesser aufweisen. Um gegebenenfalls die Bauhöhe der Verschwenkeinrichtung zu vermindern, kann der zweite Bolzen mittels seiner Einsteckbohrung auf den Führungsbolzen aufschiebbar sein. D. h., in Schließstellung des Deckelteils und Einschubstellung des zweiten Bolzens ergibt sich eine geringe Bauhöhe für die Verschwenkeinrichtung.

Erfindungsgemäß wird das Behältnis insbesondere so ausgebildet, dass das Deckelteil in Schließstellung auf dem Unterteil unter Ausbildung eines explosionsgeschützten Behältnisses auflegbar und mit diesem lösbar verbunden ist. Dies kann beispielsweise so erfolgen, dass ein entsprechender flammendurchschlagsicherer Spalt zwischen Deckelteil und Unterteil gebildet ist.

Verschiedene Querschnittsformen für Deckelteil und Unterteil sind denkbar, wobei im einfachsten Fall und zur einfachen Nebeneinanderordnung von mehreren Behältnissen Deckelteil und Unterteil einen im Wesentlichen viereckigen Querschnitt aufweisen und entsprechende Verschwenkeinrichtungen in zwei benachbarten Ecken von jeweils Deckelteil und Unterteil ausgebildet sind.

Eine einfache Festlegung der Einschraubstellung der Aufnahmehülse kann sich dadurch ergeben, dass am oberen Ende der Vertikalbohrung eine Anlagestufe ausgebildet ist, auf welcher zur Festlegung der Einschraubtiefe beziehungsweise -stellung der obere Endabschnitt der Aufnahmehülse aufsetzbar ist.

Im Folgenden wird ein vorteilhaftes Ausführungsbeispiel der Erfindung anhand der beigefügten Figuren näher erläutert.

Es zeigen:
- Figur 1: einen Vertikalschnitt durch ein erfindungsgemäßes Behältnis, und
- Figur 2: eine Vergrößerung eines Details A aus Figur 1 zur Darstellung einer Verschwenkeinrichtung.

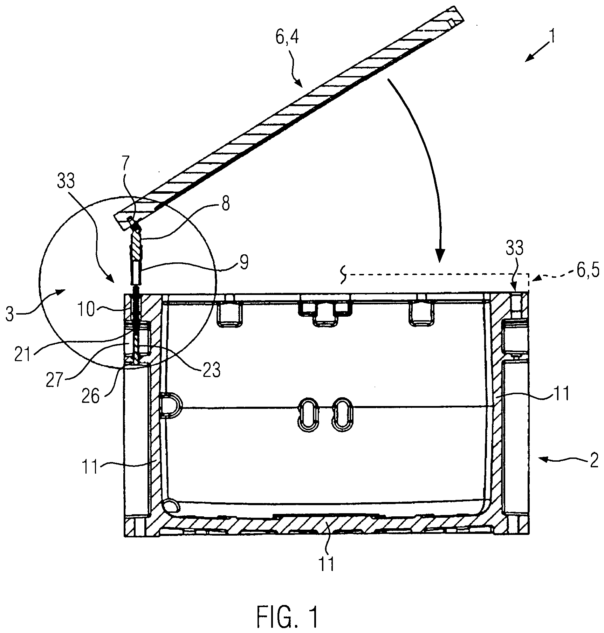

Figur 1 zeigt einen Vertikalschnitt durch ein Ausführungsbeispiel eines erfindungsgemäßen Behältnisses 1 mit Verschwenkeinrichtung 3. Ein solches Behältnis weist in der Regel einen viereckigen und insbesondere rechteckförmigen Querschnitt auf. Ein solcher Querschnitt besitzt vier Ecken 33, wobei in jeder dieser Ecken entsprechende Einrichtungen zur Anordnung der Verschwenkeinrichtung 3 angeordnet sein können. Dabei ist es ausreichend, wenn die Verschwenkeinrichtung 3 in zwei benachbarten Ecken je nach Öffnungsrichtung eines Deckelteils 6 relativ zum Unterteil 2 angeordnet ist. In Figur 1 ist das Deckelteil 6 in Öffnungsstellung 4 angeordnet, wobei gleichzeitig in Figur 1 gestrichelt und nur teilweise angedeutet eine entsprechende Schließstellung 5 des Deckelteils 6 dargestellt ist.

In Schließstellung 5 des Deckelteils 6 wird ein explosionsgeschütztes Behältnis 1 gebildet, wobei beispielsweise ein entsprechender flammendurchschlagsicherer Spalt zwischen Deckelteil und Unterteil gebildet ist.

Das Behältnis 1 weist eine umlaufende Wandung 11 auf, die sowohl Seitenflächen als auch einen Boden bildet. Eine Verschwenkeinrichtung 3 ist dargestellt, die in einer bereits vom Unterteil gelösten Stellung angeordnet ist. Erfindungsgemäß lässt sich auf diese Weise einfach das Deckelteil vom Unterteil ohne Ausbau des Unterteils aus seiner Montageposition entfernen.

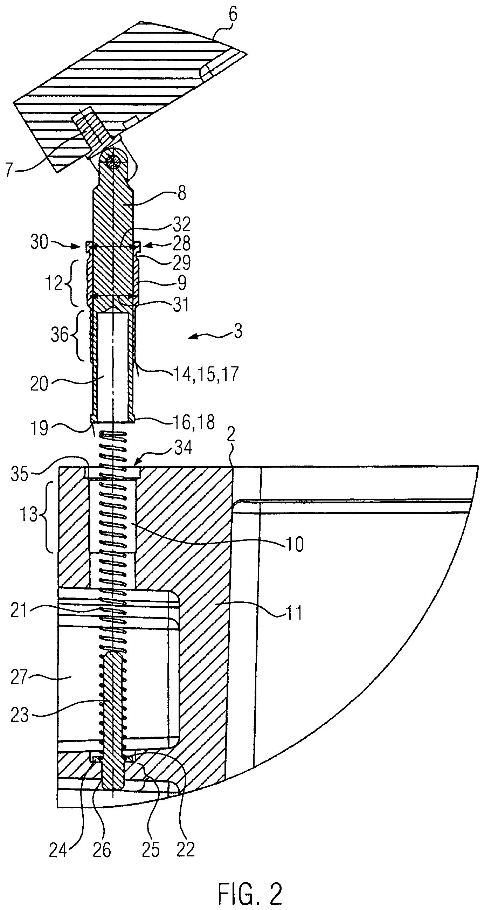

Die Verschwenkeinrichtung 3 wird im Hinblick auf Figur 2 und als vergrößerte Darstellung des Details A nach Figur 1 näher erläutert.

Die Verschwenkeinrichtung 3 weist einen ersten Bolzen 7 und einen zweiten Bolzen 8 auf. Der erste Bolzen 7 ist in einer Einschraubbohrung des Deckelteils 6 befestigt. An seinem aus dem Deckelteil 6 vorstehenden Ende ist der erste Bolzen 7 mit dem zweiten Bolzen 8 verschwenkbar verbunden. Der zweite Bolzen erstreckt sich in Richtung einer Aufnahmehülse 9, die einen weiteren Teil der Verschwenkeinrichtung 3 bildet. Die Aufnahmehülse 9 ist zusammen mit dem zweiten Bolzen 8 in eine in der entsprechenden Ecke 33 des Unterteils 2 ausgebildete Vertikalbohrung 10 einsetzbar.

Das Einsetzen und insbesondere das Befestigen der Aufnahmehülse in der Vertikalbohrung erfolgt durch ein Außengewinde 12 auf einer Außenseite der Aufnahmehülse 9 und ein Innengewinde 13 auf einer Innenseite der Vertikalbohrung 10. Oberhalb des Bereichs der Aufnahmehülse mit Außengewinde 12 ist eine Ringnut oder ein Ringspalt 29 angeordnet. Dieser dient zum Angriff eines Werkzeugs an die Aufnahmehülse und entsprechend zum Verdrehen der Aufnahmehülse in der Vertikalbohrung zum Lösen beziehungsweise Befestigen von dieser beziehungsweise in dieser.

Oberhalb des Ringspalts 29 weist die Aufnahmehülse 9 an ihrem oberen Hülsenende 28 einen oberen Endabschnitt 30 auf, der einen Außendurchmesser 32 aufweist. Dieser ist größer als ein entsprechender Außendurchmesser 31 der Aufnahmehülse beispielsweise unterhalb des Ringspaltes 29. An den Bereich mit Außengewinde der vertikalen Aufnahmehülse 9 schließt sich ein unterer Endabschnitt 36 an, der einen geringeren Durchmesser als den Durchmesser 31 aufweist. Dieser untere Endabschnitt 36 weist am unteren Hülsenende 14 einen Anschlag 15 in Form eines Endrandes 17 auf. Mit diesem Anschlag 15 gerät ein Gegenanschlag 16 am zweiten Bolzen in Anlage, wenn der zweite Bolzen 8 in Ausschubstellung bei in der Vertikalbohrung 10 eingeschraubten Aufnahmehülse 9 angeordnet ist. D. h., der zweite Bolzen 8 lässt sich aus der Aufnahmehülse 9 ausschieben, bis der Gegenanschlag 16 am Anschlag 15 anliegt. Der Gegenanschlag 16 ist durch einen nach außen und radial vorstehenden Randflansch 18 gebildet. Weiterhin weist der zweite Bolzen 8 an seinem unteren Bolzenende 19 eine nach unten offene Einsteckbohrung 20 auf. In dieser ist eine Druckfeder 21 zumindest teilweise einsteckbar, wobei in Schließstellung des Deckelteils 6 und in Einschubstellung des zweiten Bolzens 8 weiterhin ein Führungsbolzen 23 zumindest teilweise in dieser Einsteckbohrung 20 eingesteckt ist.

Die Vertikalbohrung 10 weist an ihrem oberen Ende 34 einen vergrößerten Durchmesser in Form einer Anlagestufe 35 auf, an welcher bei vollständig in der Vertikalbohrung 10 eingeschraubte Aufnahmehülse 9 der obere Endabschnitt 30 anliegt und somit die Einschraubtiefe oder Einschraubposition der Aufnahmehülse 9 bestimmt.

Der entsprechende Außendurchmesser des Randflansches 18 am unteren Bolzenende 19 ist passend zum Innendurchmesser der Vertikalbohrung 10, sodass der Randflansch 18 entlang der Vertikalbohrung 10 bis in den Bereich einer nach außen offenen Ausnehmung 27 in der Wandung 11 des Unterteils 2 verschiebbar ist. Das Verschieben kann in diesem Zusammenhang soweit erfolgen, dass zumindest in Schließstellung des Deckelteils 6 und in Einschubstellung des zweiten Bolzens 8 der Führungsbolzen 23 zumindest teilweise in die Einsteckbohrung 20 eingeschoben ist.

Der Führungsbolzen 23 ist über die seitlich offene Ausnehmung 27 in der Wandung 11 einsetzbar. Das Einsetzen erfolgt durch Einschrauben eines unteren Endabschnitts 25 des Führungsbolzens 23 in eine entsprechende Einschraubbohrung 26. Diese ist koaxial zur Vertikalbohrung 10 ausgerichtet. Entsprechend weist der untere Endabschnitt 25 des Führungsbolzens 23 ein Außengewinde und die Einschraubbohrung 26 ein Innengewinde auf.

Zur weiteren Festlegung des Führungsbolzens 23 in der Einschraubbohrung 26 sowie zur Abstützung eines unteren Federendes 22 dient ein radial nach außen vorstehender Anschlagflansch 24 des Führungsbolzens 23. Dieser ist versenkt und oberhalb der Einschraubbohrung 26 angeordnet und legt insbesondere die Einschraubposition des Einschraubbolzens 26 fest. Auf dem aus der Einschraubbohrung 26 vorstehenden Teil des Führungsbolzens 23 ist die Druckfeder 21 angeordnet, die sich mit ihrem unteren Feder-ende 22 auf diesem Anschlagflansch 24 abstützt.

In Figur 2 sind die entsprechenden Teile der Verschwenkeinrichtung 3 bereits voneinander gelöst dargestellt, sodass ein Entfernen des Deckelteils in einfacher Weise und ohne Entfernen des Unterteils aus seiner Montageposition möglich ist. Es wird nur die Aufnahmehülse 9 aus der Vertikalbohrung 10 ausgeschraubt, wobei dies ohne Beeinflussung des in der Aufnahmehülse gleitverschieblich gelagerten zweiten Bolzens 8 möglich ist. Nach Lösen der Gewinde ist das Deckelteil 6 zusammen mit erstem Bolzen 7, zweitem Bolzen 8 und Aufnahmehülse 9 nach oben vom Unterteil abhebbar. Es besteht ebenfalls die Möglichkeit, die Druckfeder 21 zu entnehmen. Zum Lösen des Führungsbolzens 23 wird die seitlich offene Ausnehmung 27 der Wandung 11 verwendet. Durch diese erfolgt ein Zugriff auf den Führungsbolzen 23, sodass dieser aus der entsprechenden Einschraubbohrung 26 herausschraubbar ist.

Zum Einsetzen der Aufnahmehülse 9 wird das Deckelteil 6 in Figur 2 nach unten bewegt und bei entsprechender Einsetztiefe der Aufnahmehülse 9 erfolgt eine Verschraubung von Außengewinde 12 und Innengewinde 13 zur Befestigung der Aufnahmehülse 9 in der Vertikalbohrung 10. Gleichzeitig wird der zweite Bolzen 8 in die Vertikalbohrung 10 eingesetzt und nimmt über seine untere Einsteckbohrung 20 die Druckfeder 21 teilweise auf.

Eine entsprechende Verschwenkeinrichtung 3 ist bei dem erfindungsgemäßen Behältnis 1 in zwei benachbarten Ecken angeordnet. Deckelteil und Unterteil können allerdings in jeder ihrer Ecken zur Anordnung der entsprechenden Verschwenkeinrichtung 3 ausgebildet sein, siehe auch Figur 1.

## Patentansprüche

1. Behältnis (1) mit zumindest einem kastenförmigen Unterteil (2) und einem mit diesem mittels einer Verschwenkeinrichtung (3) zwischen einer Schließstellung (5) und einer Öffnungsstellung (4) verschwenkbar verbundenen Deckelteil (6), welche Verschwenkeinrichtung (3) einen dem Deckelteil (6) zugeordneten ersten Bolzen (7) und einen dem Unterteil (2) zugeordneten zweiten Bolzen (8) aufweist, welche verschwenkbar miteinander verbunden sind, wobei der zweite Bolzen (8) im Unterteil (2) zwischen einer Einschub- und einer Ausschubstellung längsverschieblich gelagert ist, **dadurch gekennzeichnet, dass** der zweite Bolzen (8) in einer Außenhülse (9) längsverschieblich zwischen der Einschub- und Ausschubstellung gelagert ist, welche Aufnahmehülse (9) im Unterteil (2) lösbar von Seiten des Deckelteils (6) her gelagert ist.

2. Behältnis nach Anspruch 1, **dadurch gekennzeichnet, dass** eine zumindest in Richtung Deckelteil (6) offene Vertikalbohrung (10) in einer Wandung (11) des Unterteils (2) ausgebildet ist, in welcher die Aufnahmehülse (9) anordbar ist.

3. Behältnis nach Anspruch 1 oder 2, **dadurch gekennzeichnet, dass** die Aufnahmehülse (9) ein Außengewinde (12) und die Vertikalbohrung (10) ein Innengewinde (13) zur gegenseitigen lösbaren Befestigung aufweist.

4. Behältnis nach einem der vorangehenden Ansprüche, **dadurch gekennzeichnet, dass** die Außenhülse (9) insbesondere an ihrem unteren Hülsenende (14) einen zumindest teilweise umlaufenden Anschlag (15) aufweist, der in Ausschubstellung des zweiten Bolzens (8) mit einem Gegenanschlag (16) des zweiten Bolzens (8) in Anlage ist.

5. Behältnis nach einem der vorangehenden Ansprüche, **dadurch gekennzeichnet, dass** der Anschlag (15) durch den unteren Endrand (17) der Aufnahmehülse (9) gebildet ist.

6. Behältnis nach einem der vorangehenden Ansprüche, **dadurch gekennzeichnet, dass** der Gegenanschlag (16) als radial nach außen vorstehender Randflansch (18) insbesondere am unteren Bolzenende (19) des zweiten Bolzens (8) gebildet ist.

7. Behältnis nach einem der vorangehenden Ansprüche, **dadurch gekennzeichnet, dass** der zweite Bolzen (8) eine von seinem unteren Bolzenende (19) her offene Einsteckbohrung (20) aufweist, in die zumindest teilweise eine Druckfeder (21) einsteckbar ist.

8. Behältnis nach einem der vorangehenden Ansprüche, **dadurch gekennzeichnet, dass** die Druckfeder (21) sich an ihrem der Einsteckbohrung (20) gegenüberliegenden unteren Federende (22) im Unterteil (2) abstützt.

9. Behältnis nach einem der vorangehenden Ansprüche, **dadurch gekennzeichnet, dass** dem unteren Federende (22) ein Führungsbolzen (23) zugeordnet ist, auf den die Druckfeder (21) zumindest teilweise aufgeschoben ist.

10. Behältnis nach einem der vorangehenden Ansprüche, **dadurch gekennzeichnet, dass** der Führungsbolzen (23) einen zumindest teilweise umlaufenden, radial nach außen vorstehenden Anschlagflansch (24) aufweist, welcher das untere Federende (22) abstützt.

11. Behältnis nach einem der vorangehenden Ansprüche, **dadurch gekennzeichnet, dass** der Führungsbolzen (23) mit seinem unteren Endabschnitt (25) in einer Einschraubbohrung (26) in der Wandung (11) des Behältnisses (1) einschraubbar ist.

12. Behältnis nach einem der vorangehenden Ansprüche, **dadurch gekennzeichnet, dass** eine nach außen offene Ausnehmung (27) in der Wandung (11) oberhalb der Einschraubbohrung (26) zum Ein-/Ausbau des Führungsbolzens (23) ausgebildet ist.

13. Behältnis nach einem der vorangehenden Ansprüche, **dadurch gekennzeichnet, dass** die Aufnahmehülse (9) benachbart zum oberen Hülsenende (28) einen umlaufenden Ringspalt (29) aufweist.

14. Behältnis nach einem der vorangehenden Ansprüche, **dadurch gekennzeichnet, dass** die Aufnahmehülse (9) in ihrem oberen Endabschnitt (30) oberhalb des Ringspalts (29) einen im Vergleich zum Außendurchmesser (31) unterhalb des Ringspalts (29) größeren Außendurchmessers (32) aufweist.

15. Behältnis nach einem der vorangehenden Ansprüche, **dadurch gekennzeichnet, dass** der zweite Bolzen (8) mittels seiner Einsteckbohrung (20) auf den Führungsbolzen (23) aufschiebbar ist.

16. Behältnis nach einem der vorangehenden Ansprüche, **dadurch gekennzeichnet, dass** das Deckelteil (6) in Schließstellung (5) auf dem Unterteil (2) unter Ausbildung eines explosionsgeschützten Behältnisses auflegbar und mit diesem lösbar verbunden ist.

17. Behältnis nach einem der vorangehenden Ansprüche, **dadurch gekennzeichnet, dass** Deckelteil (6) und Unterteil (2) einen im Wesentlichen viereckigen Querschnitt aufweisen und entsprechende Verschwenkeinrichtungen (3) in zwei benachbarten Ecken (33) von jeweils Deckelteil (6) und Unterteil (2) ausgebildet sind.

18. Behältnis nach einem der vorangehenden Ansprüche, **dadurch gekennzeichnet, dass** am oberen Ende (34) der Vertikalbohrung (10) eine Anlagestufe (35) ausgebildet ist, auf welcher zur Festlegung einer Einschraubtiefe der obere Endabschnitt (30) der Aufnahmehülse (9) abstützbar ist.

## Claims

1. Container (1) with at least one box-shaped lower part (2) and a lid part (6) connected to the lower part by a pivoting means (3) to be pivotable between a closed position (5) and an open position (4), the pivoting means (3) comprising a first bolt (7) assigned to the lid part (6) and a second bolt (8) assigned to the lower part (2), which are pivotally connected to each other, wherein the second bolt (8) is slidably supported in a longitudinal direction in the lower part (2) between an inserted position and an extracted position, **characterized in that** the second bolt (8) is slidably supported in the longitudinal direction in an outer sleeve (9) between the inserted position and the extracted position, the receiving sleeve (9) being supported in the lower part (2) to be releasable from the side of the lid part (6).

2. Container according to claim 1, **characterized in that** a vertical boring (10) is formed in a wall (11) of the lower part (2) which is at least open in the direction to the lid part (6), in which boring the receiving sleeve (9) can be arranged.

3. Container according to claim 1 or 2, **characterized in that** the receiving sleeve (9) has an outer threading (12) and the vertical boring (10) has an inner threading (13) for mutual releasable fixation.

4. Container according to any of the preceding claims, **characterized in that** the outer sleeve (9) comprises in particular at its lower sleeve end (14) an at least partially circumferential limit stop (15), which in extracted position of the second bolt (8) is in abutment with a counter stop (16) of the second bolt (8).

5. Container according to any of the preceding claims, **characterized in that** the limit stop (15) is formed by the lower end edge (17) of the receiving sleeve (9).

6. Container according to any of the preceding claims, **characterized in that** the counter stop (16) is formed as a radially outwardly protruding edge flange (18) in particular at the lower bolt end (19) of the second bolt (8).

7. Container according to any of the preceding claims, **characterized in that** the second bolt (8) comprises an insertion boring (20) which is open from its lower bolt end (19), in which boring at least partially a pressure spring (21) can be inserted.

8. Container according to any of the preceding claims, **characterized in that** the pressure spring (21) is supported at its lower spring end (22) opposite to the insertion boring (20) in the lower part (2).

9. Container according to any of the preceding claims, **characterized in that** a guiding bolt (23) is assigned to the lower spring end (22) on which the pressure spring (21) is at least partially shifted on.

10. Container according to any of the preceding claims, **characterized in that** the guiding bolt (23) comprises an at least partially circumferential and radially outwardly protruding abutment flange (24), which supports the lower spring end (22).

11. Container according to any of the preceding claims, **characterized in that** the guiding bolt (23) can be screwed in with its lower end region (25) in a screw-in boring (26) in the wall (11) of the container (1).

12. Container according to any of the preceding claims, **characterized in that** an outwardly open recess (27) is formed in the wall (11) above the screw-in boring (26) for assembly and disassembly of the guiding bolt (23).

13. Container according to any of the preceding claims, **characterized in that** the receiving sleeve (9) comprises a circumferential annular gap (29) adjacent to the upper sleeve end (28).

14. Container according to any of the preceding claims, **characterized in that** the receiving sleeve (9) has an outer diameter (32) in its upper end section (30) above the annular gap (29) which is larger in relation to the outer diameter (31) below the annular gap (29).

15. Container according to any of the preceding claims, **characterized in that** the second bolt (8) is slidable onto the guiding bolt (23) by its insertion boring (20).

16. Container according to any of the preceding claims, **characterized in that** the lid part (6) in the closed position (5) is disposed on the lower part (2) under formation of an explosion-protected container and is releasably connected to the lower part.

17. Container according to any of the preceding claims, **characterized in that** the lid part (6) and the lower part (2) have an essentially quadrangular cross-section and the corresponding pivoting means (3) are provided in two adjacent corners (33) of each lid part (6) and lower part (2).

18. Container according to any of the preceding claims, **characterized in that** at the upper end (34) of the vertical boring (10) an abutment step (35) is provided, on which the upper end section (30) of the receiving sleeve (9) is supported for defining a screw-in depth.

## Revendications

1. Récipient (1) avec au moins une partie inférieure (2) en forme de caisse et avec une partie couvercle (6) assemblée de manière à pouvoir pivoter entre une position fermée (5) et une position ouverte (4) au moyen d'un dispositif de pivotement (3), lequel dispositif de pivotement (3) comporte un premier axe (7) associé à la partie couvercle (6) et un deuxième axe (8) associée à la partie inférieure (2), lesquels axes sont reliés entre eux de manière à pouvoir pivoter, le deuxième axe (8) étant logé dans la partie inférieure (2) de manière à pouvoir se déplacer longitudinalement entre une position insérée et une position sortie, **caractérisé en ce que** le deuxième axe (8) est logé dans un manchon extérieur (9) de manière à pouvoir se déplacer longitudinalement entre la position insérée et la position sortie, lequel manchon de logement (9) est logé dans la partie inférieure (2) de manière amovible à partir des côtés de la partie couvercle (6).

2. Récipient selon la revendication 1, **caractérisé en ce qu'**un trou vertical (10) ouvert au moins en direction de la partie couvercle (6) est conçu dans une paroi (11) de la partie inférieure (2), trou dans lequel le manchon de logement (9) peut être placé.

3. Récipient selon la revendication 1 ou 2, **caractérisé en ce que** le manchon de logement (9) comporte un filetage extérieur (12) et le trou vertical (10) comporte un filetage intérieur (13) afin de réaliser une fixation mutuelle amovible.

4. Récipient selon l'une des revendications précédentes, **caractérisé en ce que** le manchon extérieur (9) comporte en particulier au niveau de son extrémité inférieure de manchon (14) une butée (15) au moins partiellement périphérique qui, dans la position sortie du deuxième axe (8), est en appui avec une contre-butée (16) du deuxième axe (8).

5. Récipient selon l'une des revendications précédentes, **caractérisé en ce que** la butée (15) est formée par le bord terminal inférieur (17) du manchon de logement (9).

6. Récipient selon l'une des revendications précédentes, **caractérisé en ce que** la contre-butée (16) est formée comme une collerette marginale (18) dépassant de façon radiale vers l'extérieur, en particulier au niveau de l'extrémité d'axe inférieure (19) du deuxième axe (8).

7. Récipient selon l'une des revendications précédentes, **caractérisé en ce que** le deuxième axe (8) comporte un trou d'insertion (20) qui est ouvert à partir de son extrémité d'axe inférieure (19) et dans lequel un ressort de pression (21) peut être inséré au moins partiellement.

8. Récipient selon l'une des revendications précédentes, **caractérisé en ce que** le ressort de pression (21) s'appuie dans la partie inférieure (2) au niveau de son extrémité de ressort inférieure (22) située à l'opposé du trou d'insertion (20).

9. Récipient selon l'une des revendications précédentes, **caractérisé en ce qu'**un axe de guidage (23), sur lequel le ressort de pression (21) est glissé au moins en partie, est associé à l'extrémité de ressort inférieure (22).

10. Récipient selon l'une des revendications précédentes, **caractérisé en ce que** l'axe de guidage (23) comporte une bride de butée (24) au moins en partie périphérique et s'étendant de façon radiale vers l'extérieur, laquelle bride de butée soutient l'extrémité de ressort inférieure (22).

11. Récipient selon l'une des revendications précédentes, **caractérisé en ce que** l'axe de guidage (23) peut être vissé avec son tronçon terminal inférieur (25) dans un trou de vissage (26) dans la paroi (11) du récipient (1).

12. Récipient selon l'une des revendications précédentes, **caractérisé en ce qu'**un évidement (27) ouvert vers l'extérieur est conçu dans la paroi (11) au-dessus du trou de vissage (26) afin de monter/démonter l'axe de guidage (23).

13. Récipient selon l'une des revendications précédentes, **caractérisé en ce que** le manchon de logement (9) comporte une fente annulaire périphérique (29) au voisinage de l'extrémité supérieure de manchon (28).

14. Récipient selon l'une des revendications précédentes, **caractérisé en ce que** le manchon de logement (9) présente dans son tronçon terminal supérieur (30) un diamètre extérieur (32) au-dessus de la fente annulaire (29) plus grand que le diamètre extérieur (31) au-dessous de la fente annulaire (29).

15. Récipient selon l'une des revendications précédentes, **caractérisé en ce que** le deuxième axe (8) peut être glissé sur l'axe de guidage (23) au moyen de son trou d'insertion (20).

16. Récipient selon l'une des revendications précédentes, **caractérisé en ce que** la partie couvercle (6) en position fermée (5) peut être appuyée sur la partie inférieure (2) en formant un récipient protégé contre les risques d'explosion et est reliée à celle-ci de manière amovible.

17. Récipient selon l'une des revendications précédentes, **caractérisé en ce que** la partie couvercle (6) et la partie inférieure (2) présentent une section transversale globalement quadrangulaire et **en ce que** des dispositifs de pivotement (3) correspondants sont réalisés dans deux angles voisins (33) respectivement de la partie couvercle (6) et de la partie inférieure (2).

18. Récipient selon l'une des revendications précédentes, **caractérisé en ce que**, au niveau de l'extrémité supérieure (34) du trou vertical (10), est conçu un gradin d'appui (35) sur lequel peut s'appuyer le tronçon terminal supérieur (30) du manchon de logement (9) afin de fixer une profondeur de vissage.
